# FASCICULE DE BREVET EUROPEEN

(11) **EP 0 960 844 B1**
(45) Date de publication et mention de la délivrance du brevet: **20.11.2002**
(21) Numéro de dépôt: 99450011.4
(22) Date de dépôt: 26.05.1999
(51) Int. Cl.: B65G 69/00

(54) **Cale autonome et automatique d'immobilisation de véhicules et dispositif modulaire d'immobilisation utilisant ces cales**
Autonomer und automatischer Keil als Wegfahrsperre für Fahrzeuge und eine modulare Sperrvorrichtung unter Verwendung dieses Keils
Autonomous and automatic chock for immobilizing vehicles and modular immobilizing device using the chocks

(30) Priorité: 26.05.1998 FR 9806769
(43) Date de publication de la demande: 01.12.1999
(73) Titulaire: Glomot-Penot Systemes, 87000 Limoges (FR)
(72) Inventeur: Glomot, Gilles, 87000 Limoges (FR); Penot, Etienne, 87290 Chateauponsac (FR)
(74) Mandataire: Thébault, Jean-Louis

(56) Documents cités:
- EP-A- 0 384 850
- PATENT ABSTRACTS OF JAPAN vol. 018, no. 083 (M-1558), 10 février 1994 (1994-02-10) & JP 05 294217 A (MITSUBISHI HEAVY IND LTD), 9 novembre 1993 (1993-11-09)

## Description

La présente invention couvre une cale autonome et automatique d'immobilisation de véhicules, notamment de camions devant un quai de chargement selon le préambule de la revendication 1.

On connaît par le brevet européen EP-A-0 384 850, au nom des mêmes demandeurs, un dispositif d'immobilisation particulièrement satisfaisant.

Ce dispositif, dans l'une de ses variantes, comprend un ensemble de cales articulées dans une structure fixe, un bâti métallique rapporté ou un caisson maçonnée par exemple, pour assurer une intégration sur le lieu d'utilisation. Ces cales comprennent chacune un socle, monté pivotant par rapport à cette structure fixe, un organe de sécurité, prévu pour coopérer avec l'organe de sécurité de la cale adjacente en assurant un verrouillage, et un actionneur, en l'occurrence un vérin pneumatique.

Le fonctionnement de ce dispositif est le suivant :
1/
   - lorsque le véhicule se déplace en marche arrière vers un quai de chargement par exemple, les cales s'escamotent les unes après les autres au passage des roues,
   - dès l'arrivée en position de chargement/déchargement, la cale N°1 immédiatement devant la roue est relevée par le fait que le vérin pneumatique est soumis à une pression résiduelle qui assure le relèvement permanent de la cale mais qui génère une puissance très largement inférieure à la pression au sol de la roue, et la cale N°2 est escamotée sous la roue,
   - lorsque le véhicule repart très légèrement en avant vers la cale N°1, une pédale actionnée par la roue, en saillie sur la face de chaque cale et donc de cette cale N°1, assure le déplacement d'un levier de blocage qui coopère avec un ergot porté par la cale N°2 adjacente qui se trouve sous la roue en position escamotée, si bien que la cale N°1 est bloquée en position relevée tant que la cale N°2 est escamotée par la roue.
2/ Lorsque le véhicule doit être libéré, il faut tout d'abord que le véhicule recule légèrement pour libérer la pédale d'actionnement et donc le verrouillage, puis les vérins sont tous actionnés simultanément pour escamoter l'ensemble des cales qui sont alors déverrouillées les unes par rapport aux autres.

On note que ce dispositif est particulièrement attractif du fait que le blocage est automatique et ne requiert aucune intervention manuelle ou volontaire. De plus l'auto-blocage est assuré sur une paire de cales, celle sous la roue et la cale adjacente, mais si le véhicule venait à échapper par une manoeuvre incontrôlée à la première paire de cales, il serait bloqué par les suivantes qui s'auto-bloqueraient.

Il reste néanmoins que le dispositif demande un montage relativement précis in situ pour que les pédales, les leviers d'actionnement et les ergots se trouvent correctement positionnés les uns par rapport aux autres, en sorte d'assurer un verrouillage certain au moment voulu mais aussi un déverrouillage certain au moment de libérer le véhicule.

De plus, ce verrouillage des cales entre elles n'est pas nécessairement pratique pour la modularité des installations.

Les véhicules sont également équipés de roues ayant toutes sortes de diamètres, ce qui rend aussi très délicat les dimensionnements des cales lorsqu'elles sont reliées les unes aux autres pour assurer un verrouillage.

L'intérêt de tels dispositifs n'est plus à prouver mais il existe encore une barrière à franchir, celle de l'investissement que représente l'équipement des différents quais de chargement d'une unité industrielle. Il faut donc réduire les coûts de fabrication d'une part et diminuer les coûts d'entretien d'autre part.

Pour diminuer les coûts d'entretien, il faut diminuer le nombre d'éléments constitutifs, il faut utiliser des organes du commerce pour l'essentiel et il faut permettre une accessibilité totale de chacune des cales, indépendamment.

Si le dispositif à train de cales selon l'art antérieur donne satisfaction, il existe néanmoins une demande pour des cales modulaires autonomes et automatiques et c'est l'objet de l'invention de proposer une cale modulaire, susceptible d'être associée à d'autres cales adjacentes pour former un dispositif modulaire d'immobilisation, qui fonctionne de façon entièrement autonome et automatique, qui est de fabrication très simple, donc moins coûteuse, qui utilise des organes du commerce et dont l'entretien est rendu très aisé par l'agencement des éléments qui composent cette cale autonome et par l'accessibilité qui en découle.

A cet effet, selon l'invention, la cale autonome et automatique d'immobilisation de véhicules, notamment de camions devant un quai de chargement, comprend un caisson, un corps de cale articulé de façon pivotante par rapport à ce caisson entre une première position escamotée et une seconde position en saillie et des moyens de manoeuvre et de verrouillage du corps de cale entre les première et seconde positions, prévus pour coopérer avec le caisson. Les moyens de manoeuvre et de verrouillage comprennent un volet de verrouillage basculant entre deux positions, l'une de verrouillage en butée sur une partie du caisson, et l'autre escamotée, qui correspondent respectivement aux positions en saillie et escamotée du corps de cale, ainsi qu'un vérin double effet interposé entre ce volet et le caisson.

Selon un mode de réalisation, le volet de verrouillage comprend un logement prévu pour recevoir deux barres transversales inférieure et supérieure formant axes de basculement et des moyens de rappel interposés entre le corps de cale et le volet qui maintiennent le volet dans la position escamotée en l'absence d'action de poussée du vérin.

Selon l'agencement du mode de réalisation préférentiel, la direction de poussée du vérin est exercée au-dessous de la barre supérieure et la direction de rappel des moyens de rappel est exercée au-dessus de la barre inférieure en sorte d'obtenir les effets de basculement du volet de verrouillage.

De façon à permettre une meilleure accessibilité, le corps du vérin est solidaire d'une platine articulée de façon amovible par rapport au caisson, cette platine étant accessible par l'extérieur du caisson.

Cette platine comprend une plaque solidaire du corps du vérin, deux pattes formant crochet, prévues pour coopérer avec un axe solidaire du caisson et la plaque comprend un linguet de préhension accessible de l'extérieur du caisson.

L'invention couvre aussi le dispositif utilisant un train de ces cales.

L'invention est maintenant décrite selon un mode de réalisation particulier non limitatif, en regard des dessins annexés sur lesquels les figures représentent :
- figure 1, une vue en perspective d'une cale autonome et automatique selon l'invention, avec son bâti,
- figure 2, une vue en coupe transversale de la cale de la figure 1,
- figure 3, une vue de détail, en perspective, du volet de verrouillage, vu de l'intérieur,
- figure 4, une vue de détail, en perspective, de la chape de vérin amovible,
- figure 5, une vue en perspective du corps de cale, et
- figures 6A à 6D, un synoptique de fonctionnement d'une cale selon l'invention.

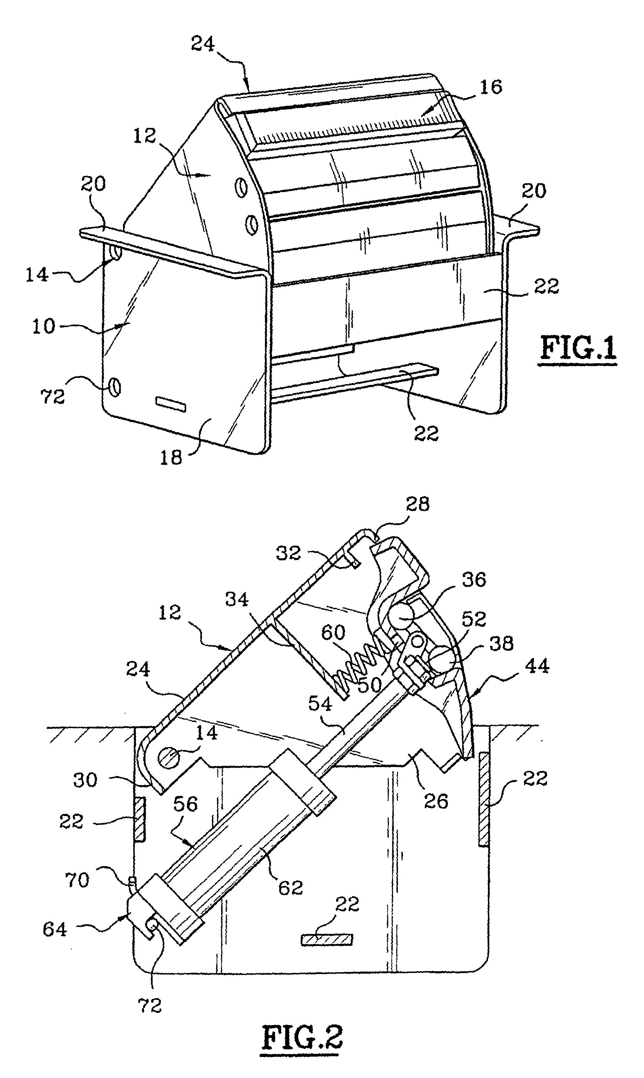

Sur la figure 1, on a représenté un bâti 10, un corps de cale 12 monté pivotant autour d'un axe 14 par rapport au bâti et des moyens 16 de manoeuvre et de verrouillage.

Le bâti 10 comprend un caisson 18 à intégrer dans une fosse lors de l'installation, des oreilles 20 latérales permettent la fixation et facilitent la manutention.

Des entretoises 22 assurent la rigidité de l'ensemble et la reprise des efforts.

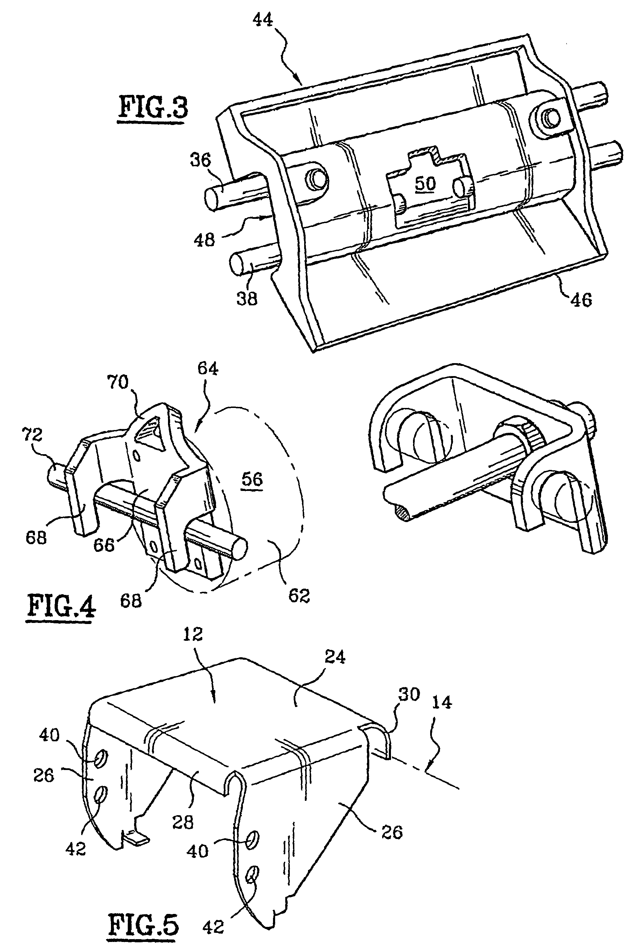

Le corps de cale 12 est montré en détail sur les figures 2 et 5.

Ce corps comprend une platine 24 supérieure et deux ailes 26, perpendiculaires qui permettent le guidage des mouvements de pivotement par rapport au caisson, comme cela sera expliqué ultérieurement.

Un rabat 28 frontal est prévu ainsi qu'un rabat 30 arrière sous lequel se loge l'axe 14 de pivotement.

Cette platine 24 comprend en outre une butée 32, en saillie vers l'intérieur du caisson, immédiatement en arrière du rabat 28 frontal. Il est aussi prévu deux languettes 34, sensiblement parallèles au rabat 28 frontal, en saillie également vers l'intérieur du caisson.

Cette platine 24 est complétée par deux barres supérieure 36 et inférieure 38, fixes, rapportées entre les ailes 26 latérales, dans des trous 40 et 42.

Les moyens 16 de manoeuvre et de verrouillage comprennent un volet 44 de verrouillage, montré en détail sur la figure 3, qui comprend un bord 46 inférieur d'appui ainsi qu'un logement 48 transversal, prévu pour recevoir en parties haute et basse respectivement, les barres supérieure 36 et inférieure 38. Une fenêtre 50 permet de laisser passer la tête 52 d'une tige 54 d'un vérin 56, double effet.

Ce vérin a sa direction de poussée sensiblement parallèle au plan de la platine 24 du corps de cale lorsque ce corps de cale est en position en saillie. Cette direction de poussée passe nécessairement au-dessous de la barre supérieure 36 pour obtenir les effets de basculement du volet 44 de verrouillage.

Ce volet porte aussi deux plots 58 de réception d'une des extrémités de ressorts 60, visibles sur la figure 2, ressorts qui sont en appui chacun par leur autre extrémité sur les languettes 34 de la platine 24, prévues à cet effet.

On note que la direction de rappel des ressorts est sensiblement parallèle à la direction de poussée du vérin 56 et au-dessus de celle-ci. De plus, cette direction est exercée nécessairement au-dessus de la barre inférieure 38.

Le corps 62 du vérin 56 est solidaire d'un support 64, représenté isolé sur la figure 4.

Ce support 64 comprend une plaque 66 vissée sur le fond du corps de vérin, deux pattes 68 formant crochet, disposées de part et d'autre de la plaque et un linguet 70 de préhension, légèrement coudé par rapport au plan de la plaque.

Les deux pattes 68 formant crochet sont prévues pour venir s'accrocher en appui sur un axe 72, transversal, solidaire du caisson 18.

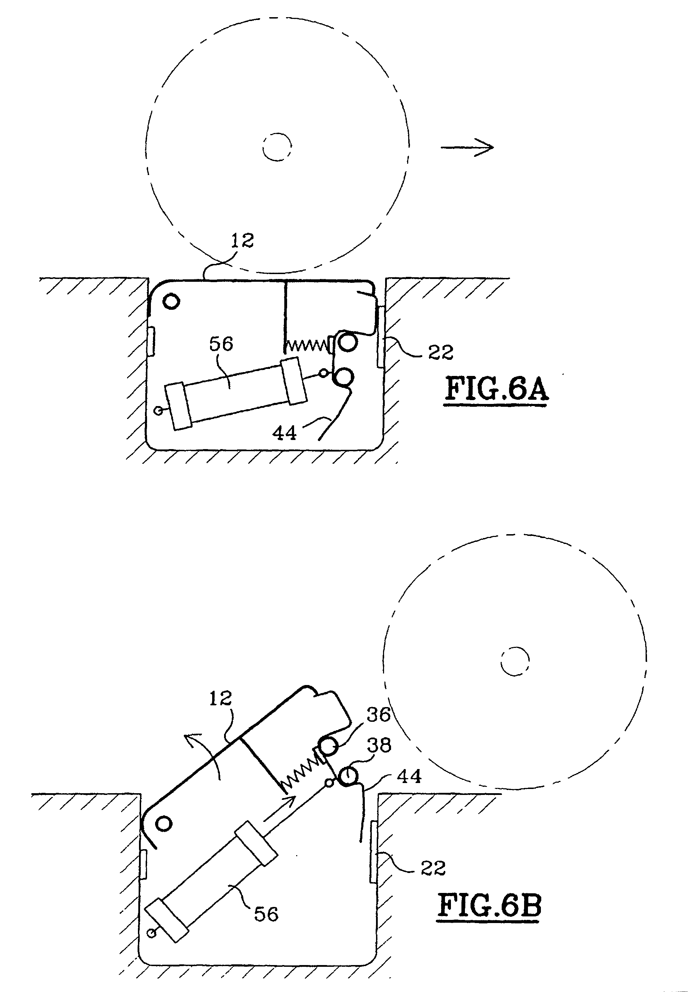

Le fonctionnement de la cale selon l'invention est maintenant décrit, ceci en regard du synoptique des figures 6A à 6D. On a représenté une cale unique autonome et automatique mais dans les installations complètes à quai, on a souvent recours à un dispositif utilisant une succession de cales, alignées les unes derrière les autres, en fonction des besoins.

Sur la figure 6A, le véhicule dont on a symbolisé une roue, recule dans le sens de la flèche. Le piston du vérin est rétracté si bien que la platine 24 est escamotée et se trouve dans le plan du sol. Ceci évite la présence de cales en saillie sur le terre-plein devant un quai de chargement par exemple, lorsqu'il n'y a aucun véhicule.

Dans ce cas, le volet 44 de verrouillage est basculé par rapport à la barre 36 supérieure, le logement 48 du volet étant écarté de la barre inférieure 38.

Les ressorts 60 sont en action permanente et pressent le volet sur la barre 36 supérieure.

Dès que le véhicule est en place, figure 6B, le vérin 56 est mis sous pression. Compte tenu de l'orientation de la direction de poussée, cette action du vérin provoque, par l'intermédiaire du volet de verrouillage et des barres inférieure et supérieure, le pivotement et la mise en saillie de la platine 24 du corps 12 de cale.

Cette mise en saillie est provoquée pour toutes les cales qui ne sont pas sous les roues, et notamment pour celle qui est immédiatement devant la roue, telle que représentée sur cette figure 6B.

Le volet de verrouillage par son logement 48 est alors en appui sur les deux barres 36 et 38 transversales, car le volet 44 de verrouillage est pressé par le piston du vérin contre ces deux barres.

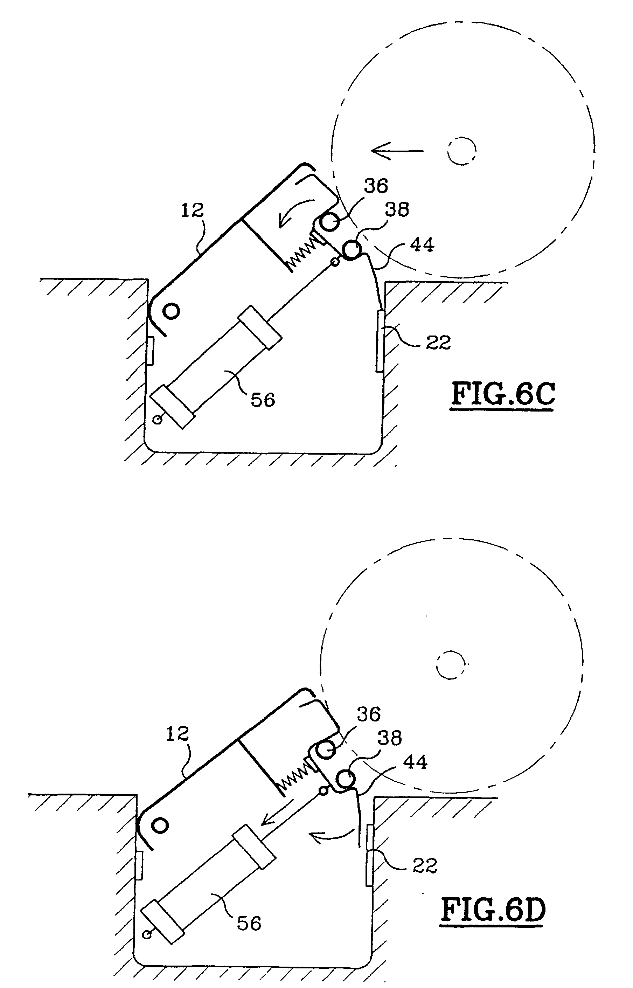

Sur la figure 6C, la tige 54 du vérin double effet est totalement sortie et la pression interne est maintenue. On constate que le volet 44 de verrouillage est basculé par rapport à la barre inférieure 38 car la pression du vérin, donc l'effort de poussée qui en résulte, est supérieure à la raideur des ressorts 60.

Ce basculement provoque la mise en appui du bord 46 inférieur de ce volet de verrouillage sur l'entretoise 22 en vis à vis qui sert de butée.

La platine 24 du corps de cale 12 est alors immobilisée en pivotement autour de l'axe 14. Ce maintien en saillie assure le blocage de la roue si celle-ci vient à avancer.

On constate aussi que l'effort exercé par la roue sur le corps de cale renforce encore l'effet de blocage puisque la roue appuie sur la partie haute du volet de verrouillage, tendant à le faire basculer dans le même sens que le vérin, donc à mettre le bord inférieur en appui sur la butée.

Ainsi en cas de panne d'alimentation du vérin, la sécurité est positive puisque le volet est toujours maintenu en position de blocage.

Lorsque le véhicule doit être libéré, figure 6D, il convient de rétracter la tige 54 de vérin dans le corps de vérin, grâce au double effet, ce qui provoque le basculement du bord inférieur du volet vers l'intérieur du caisson et donc l'échappement du bord 46 inférieur de la butée formée par l'entretoise 22.

Ceci est possible même lorsque la roue est en appui sur le volet 44 car le volet est libre par rapport aux deux barres 36 et 38, ce qui laisse un débattement en translation et de plus la surface en appui contre le pneu reste très faible. Enfin, le déplacement est un arc de cercle avec simplement un point de tangence, quelques bars de pression suffisent dans toutes les circonstances.

Il est à remarquer que dans tous les cas, le corps de cale est déplacé de façon contrôlée, même lorsqu'il échappe sous l'effet du vérin. Ainsi le fait d'éviter les chocs confère au matériel une plus grande longévité et permet un gain sur la résistance mécanique nécessaire donc une diminution des épaisseurs.

La cale selon l'invention présente aussi des avantages très appréciables quant à l'accessibilité. En effet, ainsi que cela vient d'être décrit, les éléments mobiles sont, pour la plupart, simplement emboîtés et non vissés ou soudés les uns aux autres.

Pour accéder à tous les éléments de la cale sans retirer celle-ci de la fosse, il suffit, après avoir fait tomber la pression dans le vérin, de crocheter le linguet 70 de préhension du support 64, ceci au moyen d'une tringle par l'extérieur, le long du caisson 18.

Le support 64 est soulevé pour dégager les pattes 68 de l'axe 72, si bien que le vérin reste lié au volet 44 de verrouillage par sa tête 52 mais le corps 56 est libre.

Le corps 12 de cale peut alors être soulevé comme un couvercle, autorisant l'accès à tous les éléments intérieurs au caisson.

Il est possible de changer le vérin 56 en un temps très bref, de même pour le volet de verrouillage ou pour un ressort.

On note que le nombre d'éléments est très restreint ce qui est un atout de la cale selon l'invention et que les pièces d'usure, le vérin ou les ressorts, sont des organes du commerce qui peuvent donc être commandés et livrés très rapidement ou même mis en stock compte tenu du prix bas dû à la fabrication en série.

La mise en place de la cale selon l'invention peut se faire en installant un ensemble de cales alignées pour réaliser un dispositif à train de cales. Dans ce cas, la précision de positionnement est toute relative puisque chaque cale est autonome. De plus dans un dispositif à train de cales, si l'une des cales est en panne, cela n'interdit aucunement le fonctionnement des autres cales, ce qui est un gage de sécurité.

## Revendications

1. Cale autonome et automatique d'immobilisation de véhicules, notamment de camions devant un quai de chargement, comprenant un caisson (18), un corps (12) de cale (14), articulé de façon pivotante par rapport à ce caisson entre une première position escamotée et une seconde position en saillie, comprenant des moyens (16) de manoeuvre et de verrouillage du corps (12) de cale entre les première et seconde positions, **caractérisée en ce que** ces moyens (16) de manoeuvre et de verrouillage comprennent un volet (44) de verrouillage basculant entre deux positions l'une de verrouillage en butée sur une partie (22) du caisson, et l'autre escamotée, qui correspondent respectivement aux positions en saillie et escamotée du corps (12) de cale, ainsi qu'un vérin (56) double effet, interposé entre ce volet (44) et le caisson (18).

2. Cale selon la revendication 1, **caractérisée en ce que** le volet (44) de verrouillage comprend un logement (48) prévu pour recevoir deux barres (36, 38) inférieure et supérieure, orientées transversalement par rapport au vérin (56), formant axe de basculement et des moyens (60) de rappel interposés entre le corps (12) de cale et le volet (44) qui maintiennent le volet dans la position escamotée en l'absence d'action de poussée du vérin.

3. Cale selon la revendication 2, **caractérisée en ce que** la direction de poussée du vérin (56) est exercée au-dessous de la barre (36) supérieure et la direction de rappel des moyens (60) de rappel est exercée au-dessus de la barre (38) inférieure en sorte d'obtenir les effets de basculement du volet (44) de verrouillage.

4. Cale selon l'une quelconque des revendications 2 ou 3, **caractérisée en ce que** le corps (62) du vérin (56) est solidaire d'une platine (64) articulée de façon amovible par rapport au caisson (18), cette platine étant accessible par l'extérieur du caisson.

5. Cale selon la revendication 4, **caractérisée en ce que** la platine (64) comprend une plaque (66) solidaire du corps du vérin, deux pattes (68) formant crochet, prévues pour coopérer avec un axe (72) solidaire du caisson.

6. Cale selon la revendication 5, **caractérisée en ce que** la plaque (66) comprend un linguet (70) de préhension accessible de l'extérieur du caisson.

7. Dispositif modulaire d'immobilisation de véhicules utilisant un train de cales selon l'une quelconque des revendications 1 à 6.

## Claims

1. Automatic self-contained chock for immobilising vehicles, in particular lorries at a loading bay, comprising a chamber (18), a body (12) of the chock (14), pivotally articulated with respect to the chamber between a first retracted position and a second projecting position, including means (16) for manoeuvring and locking the chock body (12) between the first and second positions, **characterised in that** the manoeuvring and locking means (16) comprise a locking flap (44) tilting between two positions, one locking in abutment on a part (22) of the chamber, and the other retracted, which correspond respectively to the projecting and retracted positions of the chock body (12), as well as a double-acting ram (56), interposed between the flap (44) and the chamber (18).

2. Chock according to claim 1, **characterised in that** the locking flap (44) comprises a housing (48) provided for receiving two bars (36, 38) upper and lower, oriented transversely with respect to the ram (56), forming a tilting axis, and return means (60) interposed between the chock body (12) and the flap (44) which hold the flap in the retracted position in the absence of any thrust action from the ram.

3. Chock according to claim 2, **characterised in that** the direction of thrust of the ram (56) is exerted below the upper bar (36) and the direction of return of the return means (60) is exerted above the lower bar (38) so as to obtain the tilting effects of the locking flap (44).

4. Chock according to either one of claims 2 or 3, **characterised in that** the body (62) of the ram (56) is fixed to a bracket (64) removably articulated with respect to the chamber (18), the bracket being accessible from the outside of the chamber.

5. Chock according to claim 4, **characterised in that** the bracket (64) comprises a plate (66) fixed to the body of the ram, two hooked lugs (68), designed to cooperate with a shaft (72) fixed to the chamber.

6. Chock according to claim 5, **characterised in that** the plate (66) includes a gripping catch (70) accessible from the outside of the chamber.

7. Modular vehicle immobilisation device using a series of chocks according to any one of claims 1 to 6.

## Patentansprüche

1. Selbständiger und automatischer Fahrzeugfeststellkeil, insbesondere für Lastkraftwagen vor einer Laderampe, mit einem Kasten (18), einem Körper (12) des Keils (14), der in bezug auf diesen Kasten zwischen einer ersten eingefahrenen Stellung und einer zweiten vorstehenden Stellung schwenkbar angebracht ist, und Mitteln (16) zum Betätigen und Verriegeln des Keilkörpers (12) zwischen der ersten und der zweiten Stellung, **dadurch gekennzeichnet, daß** diese Mittel (16) zum Betätigen und Verriegeln eine Verriegelungsklappe (44), die zwischen zwei Stellungen schwenkt, einer Verriegelungsstellung, in der sie an einem Keil (22) des Kastens anliegt, und einer eingefahrenen Stellung, die den vorstehenden bzw. eingefahrenen Stellungen des Keilkörpers (12) entsprechen, sowie einen Doppelwirkungs-Stellzylinder (56), der zwischen diese Klappe (44) und den Kasten (18) eingesetzt ist, umfassen.

2. Keil nach Anspruch 1, **dadurch gekennzeichnet, daß** die Verriegelungsklappe (44) einen Aufnahmesitz (48), der dazu vorgesehen ist, zwei Stangen (36, 38), eine untere und eine obere, aufzunehmen, die in bezug auf den Stellzylinder (56) transversal orientiert sind und die Schwenkachse bilden, sowie Rückstellmittel (60), die zwischen den Keilkörper (12) und die Klappe (44) eingesetzt sind und die Klappe bei Fehlen einer Schubwirkung des Stellzylinders in der eingefahrenen Stellung halten, umfaßt.

3. Keil nach Anspruch 2, **dadurch gekennzeichnet, daß** die Schubrichtung des Stellzylinders (56) unter der oberen Stange (36) verläuft und die Rückstellrichtung der Rückstellmittel (60) über der unteren Stange (38) verläuft, derart, daß die Schwenkwirkungen der Verriegelungsklappe (44) erhalten werden.

4. Keil nach einem der Ansprüche 2 oder 3, **dadurch gekennzeichnet, daß** der Körper (62) des Stellzylinders (56) mit einer Platine (64), die in bezug auf den Kasten (18) lösbar angelenkt ist, fest verbunden ist, wobei diese Platine von außerhalb des Kastens zugänglich ist.

5. Keil nach Anspruch 4, **dadurch gekennzeichnet, daß** die Platine (64) eine mit dem Körper des Stellzylinders fest verbundene Platte (66) und zwei einen Haken bildende Ansätze (68), die dazu vorgesehen sind, mit einer mit dem Kasten fest verbundenen Achse (72) zusammenzuwirken, umfaßt.

6. Keil nach Anspruch 5, **dadurch gekennzeichnet, daß** die Platte (66) eine Greif-Sperrklinke (70), die von außerhalb des Kastens zugänglich ist, umfaßt.

7. Modulare Fahrzeugfeststellvorrichtung, die eine Anzahl von Keilen nach einem der Ansprüche 1 bis 6 verwendet.
